# EUROPEAN PATENT SPECIFICATION

(11) **EP 3 569 410 B1**
(45) Date of publication and mention of the grant of the patent: **09.11.2022**
(21) Application number: 18175051.4
(22) Date of filing: 30.05.2018
(51) Int. Cl.: B32B 27/08, B32B 27/18, B32B 27/30, B32B 27/32, B32B 27/34, B32B 27/40, C08J 5/18, C08J 9/32

(54) **AGRICULTURE COVERING FILM FOR GREENHOUSES WITH HIGH IR EFFECTIVENESS, AND SHIELDING EFFECT TO N.I.R. RADIATIONS, GAINED WITH UTILIZATION OF HOLLOW GLASS MICROSPHERES, AND RELEVANT PRODUCTION METHOD**
LANDWIRTSCHAFTLICHE DECKFOLIE FÜR GEWÄCHSHÄUSER MIT HOHER IR-WIRKSAMKEIT UND ABSCHIRMWIRKUNG GEGEN NIR UNTER VERWENDUNG VON HOHLEN GLASMIKROKUGELN GEWONNENE STRAHLUNG UND ENTSPRECHENDES HERSTELLUNGSVERFAHREN
FILM DE COUVERTURE AGRICOLE POUR DES SERRES À HAUTE EFFICACITÉ IR ET UN EFFET DE BLINDAGE À N.I.R. RAYONNEMENTS, OBTENUS PAR L'UTILISATION DE MICROSPHÈRES DE VERRE CREUSES ET SON PROCÉDÉ DE PRODUCTION ASSOCIÉ

(30) Priority: 14.05.2018 IT 201800005317
(43) Date of publication of application: 20.11.2019
(73) Proprietor: Agriplast S.r.l., 97109 Vittoria (RG) (IT)
(72) Inventor: CASCONE, Marco, 97109 Vittoria (RG) (IT)
(74) Representative: Vinci, Marcello

(56) References cited:
- EP-A1- 1 306 403
- EP-A1- 1 857 272
- WO-A1-2008/065453
- WO-A1-2008/065454
- WO-A1-2009/060480
- US-A- 4 303 732
- US-A1- 2009 268 278

## Description

### FIELD OF THE INVENTION

This invention relates to a mono- or multi-layers plastic film, monoextruded or coextruded, for greenhouse cover film applications, characterized by the use of hollow glass microspheres, according to claim 1.

The invention comprehends the realization method as well, according to claim 7.

### STATE OF THE ART

The traditional greenhouses coverings can be divided into rigid or flexible types. This applies to both semiarch and shed type greenhouses coverings.

Rigid covers consist of glass, glass fibre reinforced polyester, corrugated rigid PVC, polymethyl methacrylate or polycarbonate, and are used with a thickness of several millimetres.

Flexible covers are constituted by plastified PVC, EVA copolymer (ethylene vinyl acetate), linear and low density PE, ethylene-tetra-fluoro ethylene, polyurethane, polypropylene and their *Blend* or mixtures, and they are used with thicknesses in the order of tenths of a millimetre.

In any case, the features presented by the greenhouse covers must be:
- Mechanical resistance, including resistance to stress arising from the weather agents and severe weather conditions, in order to adequately protect the crop below;
- Light transmission of the solar radiation, with particular respect to P.A.R. (Photosynthetic Active Radiations)
- Thermal effect, also known as greenhouse effect, as the property of transmit or filter infra red radiation (i.e. Radiation with a wavelength in the range of 7000-13000 nm)
- Long-term chemical stability, achieved by the resistance to the radiation which alter the chemical structure;
- Resistance to degradation due to the use of chemicals and pesticides by the end users (i.e.: farmers).

Flexible films are cheaper than the rigid ones, they require less expensive support structures and they are easier to apply.

The choice of cover material is therefore very important as one has to tie the different needs that can sometimes be in contrast. For instance, the mechanical resistance is increased by increasing the layer thickness, which in contrast lowers the light transmission.

Therefore, the choice of the covering material is crucial as different requirings need to be addressed. The same requirings can sometimes collide with each other.

Moreover, the mineral fillers traditionally used to alter the optical and thermal performance of the covering film, or used to enhance the characteristics of light scattering and thermal effect have the side effect to decrease total transmittance and the film mechanical properties.

The film presented in this invention involves the use of hollow glass microspheres, which allow to keep high the mechanical properties as well as the total transmittance despite a considerable increase in thermal effect, and depending on the dosage and on the desired light diffusion, the latter property can be modulated with a small negative effect on the total transmittance.

The state of the art consists in a LDPE, EVA and PP based film produced with the addition of the mineral fillers, generally constituted by alumino-silicates, which through light scattering phenomena inhibit the direct sunlight burns on the crops. In any case, these salts weaken the structure of the film and, given the same thickness, they reduce its mechanical strength.

State of the art also includes a polymeric material layer dispersing gas bubbles within. On average, it has a lower mechanical resistance compared to the films produced with the same polymer matrix, same density and no gas dispersion within.

The state of the art also describes multilayer films with different mineral fillers in different layers introduced to increase the mechanical strength; in any case these normally lower the light transmittance.

State of the art also includes the patent application WO-A-94/05727 which involves the insertion of solid particles in the film, such as mica, who are able to selectively reflect sunlight radiation. Anyway, these particles have the disadvantage of weakening the film mechanical properties as its structure becomes heterogeneous and this facilitates the migration of chemicals used for cultivation within the film. The film then tends to deteriorate very quickly.

State of the art includes the patent FR-2334708 presenting a polyethylene film for greenhouses cover applications with a transparency modified through homogeneous embedded glass microspheres, which are solid and not hollow as in the Agriplast patent.

The patent EP-A 536917 describes a high whiteness and opacity film used as packaging material for snacks or other type of food and it is not used for agricultural purposes. The above mentioned film has several cavities each of which can be occupied by preformed glass hollow sphere.

State of the art also includes mechanical modifications on at least one of the two surfaces of the film through curling , embossing or other processes which modify the surface regularity, letting the film through appropriate calenders. These mechanical modification require very expensive equipment and the limit the widths of the film to 4-5 meters.

Another known patent (1306403) from the same applicant describes a transparent film used as a covering of greenhouses, including a certain amount of hollow glass microspheres.

Following the pilot phase described briefly above, a new film for agricultural covering applications has been designed and developed. It is realized by using hollow microspheres of glass and it is characterized by both of the following characteristics:
- Elevated thermal effect compared to the same matrix-type polymeric film with no hollow glass microspheres.
- Shielding effect on radiation Near IR (wavelength in the range of 1100-2500 nm), i.e. reduction of light transmittance in this range.

### AIM OF THE FINDING

One of the objectives of the invention according to the enclosed claims is to obtain a transparent flexible film where it is possible to adjust the spectrophotometric characteristics and the light diffusivity without an appreciable decrease in the total transmittance. The film must maintain the mechanical characteristics very close to ones offered by the base polymer or polymers and allow for an almost effective "Greenhouse effect" due to the sum of these two contributions: the intrinsic effect of the polymer plus the insulation effect of the hollow glass microspheres.

According to this objectives, the film described in this invention is produced mixing one or more homogeneous or heterogeneous polymers having similar or non-similar chemical structures, but compatible from a physical point of view, with hollow glass microspheres, ranging in concentration from 0.1 to 99% in weight.

In particular, the ideal hollow glass micro sphere concentration ranges within 0.2-20%.

In relation to another feature of the invention, using tailored blown extrusion conditions according to the traditional production techniques, one can obtain a single or multilayer film, which shows a non uniform light transmission. The light transmission may vary within random shapes and dimensional areas, as a result of the different refractive indices given by the ratio between two or more polymers. Another innovative characteristic shown by the invention consist in the selective filtering of the Near Infra Red radiation (NIR). Agriplast research activity was carried out by laboratory extruders employing different types of hollow glass sphere in order to asses the possibility of achieving this result and its implications.

From the Agriplast research activities it turns out that in order to achieve the desired NIR filtering a D50 (particle size distribution) hollow glass micropsheres in a range of 15-20 microns in size need to be used.

In particular, the NIR filtering is assessed to be greater or equal than 10%.

The warm climates geographical areas (such as southern Spain, Southern Italy, the countries of the Mediterranean basin etc,) are characterized by a high incoming thermal energy, which in summer produces a considerable warming effects inside the polyethylene covered greenhouses and has a negative effect on many crops production. This downside is conventionally counteracted by the conventional practice of "whitening". This process consists in the painting of covering film with special paints containing low concentration of heavy metals.

This process has substantial costs, both for the cost of the material itself and for the costs of setting up and removal of the films once the heat spike is over. Moreover, altering the optical characteristic of the film is not fully controlled and its removal leaves residues which influences negatively the optical performance of the film other than shortening its life due to pro-degradant pollutants left overs.

There are specific NIR masters used in order to filter the specific wavelength, but they show the side effect of reducing the total transmittance in a remarkable way with respect to the effect of NIR filtering. However, these masters considerable lower the total transmittance with the NIR transmittance reduction benefit. On the other hand, the film presented in this invention is definitively superior since it synergically improves the thermal effect, and NIR transmittance reduction, together with maintaining a high total light transmittance P.A.R.

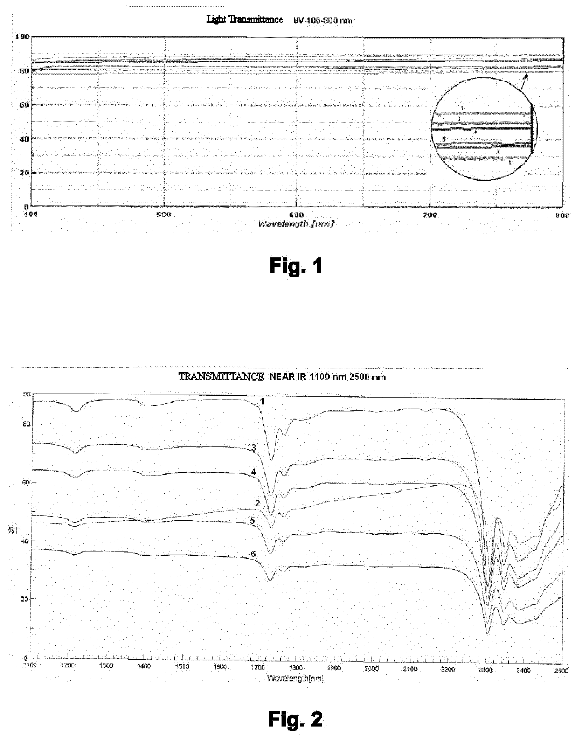

Some comparative analysis performed by Agriplast between: film samples compliant with the European standards EN13206 (2017), films formed by the same polymer matrix, films with increasing percentages of glass hollow microspheres and films with traditional NIR master; showed that, given the same NIR filtering, the films with hollow glass microspheres maintain a total transmittance which is higher than the one showed by the rest of the samples. See below a related synthesis by two graphs in the PAR (Figure 1) and in the NIR (Figure 2) which compares the following films:
- sample n° 1: conventional film cover 200 µm in thickness
- sample n° 2: cover film with standard concentration of master NIR
- sample n° 3, 4, 5, 6: four film samples belonging to the proposed invention. Samples from 3 to 6 differ from each other by the progressive hollow glass microsphere concentration. Sample n° 3 contains the lowest HGM (glass hollow microspheres) concentration, sample n° 6 contains the highest HGM concentration.

It is undoubtedly clear how the film presented in this invention is characterized by a NIR filter higher than the one offered by the conventional film, even at low HGM concentration.

The comparison between the sample n°1 and n° 3 (being the sample 3 with low content of HGM) shows that sample n° 3 has a NIR transmittance of 14.18% better than the one offered by sample n°1, given the total transmittance loss of just 0.4 % of sample n°3 over sample n°1.

Moreover at higher content of HGM regarding NIR effect, the sample n°5 is largely superior than sample n°2( that is produced with standard NIR master), being able the sample n°5 at same time of maintaining a high total transmittance.

| | | Transmittance P.A.R. | Transmittance NIR |
|---|---|---|---|
| | Sample | | |
| 1 | Film Standard 200 µm | 86,4 | 78,50% |
| 2 | Film Master NIR 200 µm | 80,7 | 50,88% |
| 3 | Film microsphere 200 µm dos.a | 85,9 | 64,32% |
| 4 | Film microsphere 200 µm dos.b | 85,4 | 56,60% |
| 5 | Film microsphere 200 µm dos.c | 81,2 | 41,50% |
| 6 | Film microsphere 200 µm dos.d | 78,5 | 30,96% |

### DESCRIPTION OF THE SYSTEM

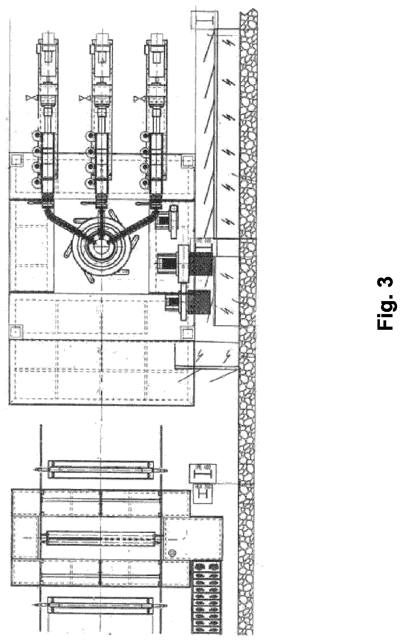

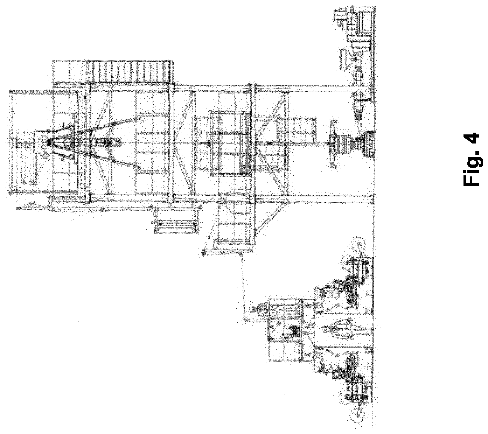

The novel film described in this patent is produced in a production system which is able to satisfy the production requirements. Such system is described, in a non-restrictive way, in Figures 3 and 4. These figures depict a schematic version of the production system. The production system which produces the film according to the findings described above is preferably constituted by a conventional extruding apparatus.

The dosing system of the various components to be mixed can be of gravimetric or volumetric type, provided that it is suitable to dose out the necessary quantities in the ratios required for the individual mixes in the individual extrusion lines, also in relation to additives, masters and colourants components to be dosed out.

The base polymer granules and *compounds* which are regarded as additives, may be subject to partial pre-mixing in a suitable hopper to feed the extruder line. Whenever the production process would imply the use of a coextruder, the granules and *compounds* feed will be proportional for each line.

When using several kinds of polymers in a monoextrusion process, the extrusion temperature needs to be close to the highest melting point of the polymers. Temperature is controlled in an automated way, sector by sector, through thermocouples sensors and thermal controllers, which are thereby connected to a logical control unit such as a PLC.

Centrifugal fan cooling system are adequately arranged to cool the extruder.

The choice of each temperature sector is defined by the friction ratio generated between the screw and its cylinder and the relative reological characteristics of the polymers in use.

In this way, the molten polymer reaches out the right viscosity and can flow through the extrusion head in a tubular geometry.

The diameter and thickness of such tubular structure are tuned by air injection within the tubular structure and by the extrusion speed.

The tubular structure is then cooled at the base from tangent air and the cooling stream goes towards the cooling tower. Going on, the tubular structure reached the towing rollers installed on top of the system, which complete the flattening of the tubular structure. The flatten film is then sent down to the winder.

In the case of the coextrusion, the coupling between layers can be realized through the use of well known stickers which promote the adhesion between the layers of the film.

Polymers that make up the layer(s) of the film can be homogeneous or heterogeneous and may have related or non-related polymer structures from molecular point of view, and may vary in concentrations from 1 to 99.9%.

Some examples of the combinations between polymers, starting from the base polymers and from the following heterogeneous couples: LLDPE and LDPE and EVA, EVOH, PA and EVA, LLDPE, LDPE and PP and PA and PA, PU, PVC and PA, EMA and EBA, HDPE and LDPE and PA, PA, and their copolymers, and all possible combinations of two or more components of these polymers.

The film can also consist in a single polymer layer as well as a multilayer.

It is also possible to use additives such as: gliding, anti-static, anti-drip, surfactants, UV stabilizers, mineral fillers, silica, zeolites, ceramic components or other materials, boron and its compounds, maleic anhydride, glues with the purpose of promote the close-by layers, nucleating agents, cross-linkers, nano-composites, etc.

It is also possible to modify and add new components in order to produce the film described in the present finding, and they will still be in the same field and aim of the invention.

It is obvious that is possible to modify and add new components in order to produce the film described in the present finding, and they will still be in the same field and aim of the invention.

In conclusion, with respect to the previous description the following claims are made.

## Claims

1. Flexible transparent film for greenhouses covering application, **characterized by** that it contains one or more of the following polymers: LDPE, LLDPE, PA, PU, PVC, EVA, EVOH, EBA, HDPE, PP, EMA, copolymers of the previously listed polymers and wherein:
a. the hollow glass microsphere (HGM) concentration ranges between 0.1 and 99%
b. the HGM density ranges between 0.125 and 0.6 g/cm³, with a density interval which ranges between 0.1 and 0.63 g/cm³ and an apparent density which ranges between 0.05 and 0.43 g/cm³
c. said film it is a multilayer film made up of a first layer which, during the extrusion process, is combined with at least a second layer
d. these films include HGM and they are produced with a thickness which ranges between 10 and 1000 µm.
and wherein the above mentioned film has glass hollow spheres with D50 particle size dimensions between 15 and 20 µm , such that the features of transmittance in the infra-red (NIR) between 1100 and 2500 nm is less by at least 5% compared to the same film which does not contain the microspheres.

2. Flexible transparent film for greenhouses covering application, according claim 1, where the variable concentration of such hollow glass microspheres ranges between 0.2 and 20%.

3. Flexible transparent film according claim 1 where the characteristics of the greenhouse effect calculated in the range of medium-long infra-red (wavelength in the range of 7,000 and 13,000 nm) are higher by at least 3% from the same film which does not contain microspheres.

4. Flexible transparent film according claim 1 for greenhouses cover application and for its features classified (according to EN13206-2017) as: Normal, Thermal Clear or Thermal Diffusive.

5. Flexible transparent film, according one or more previous claims, multilayer, where one or more layers includes HGM.

6. Flexible transparent film, according one or more previous claims, monolayer, which embeds HGM.

7. Method for producing flexible transparent film as per any of the claims above, **characterized in that** it is produced by mono or coextrusion technology, with blown extrusion, or flat die cast extrusion.

## Patentansprüche

1. Flexible, transparente Folie zur Verwendung als Gewächshausabdeckung, **dadurch gekennzeichnet, dass** sie einen oder mehrere der folgenden Polymere enthält: LDPE, LLDPE, PA, PU, PVC, EVA, EVOH, EBA, HDPE, PP, EMA, Copolymere der vorstehend aufgeführten Polymere, und wobei:
a. die Konzentration der Mikro-Glashohlkugeln (HGM) zwischen 0,1 und 99% liegt;
b. die HGM-Dichte zwischen 0,125 und 0,6 g/cm3 liegt, mit einem Dichte-Intervall zwischen 0,1 und 0,63 g/cm3 und einer Rohdichte zwischen 0,05 und 0,43 g/cm3;
c. die besagte Folie ein Mehrschichtfilm ist, bestehend aus einer ersten Schicht, die während des Extrusionsverfahrens mit wenigstens einer zweiten Schicht kombiniert wird;
d. diese Folien HGM umfassen und in einer Stärke zwischen 10 und 1000 µm produziert werden;
und wobei die oben genannte Folie Glashohlkugeln mit Partikelgröße D50 zwischen 15 and 20 µm aufweist, so dass die Durchlässigkeit im Nahinfrarot (NIR) zwischen 1100 und 2500 nm um wenigstens 5 % niedriger ist als jene, die die gleiche Folie ohne Mikrokugeln hätte.

2. Flexible, transparente Folie zur Verwendung als Gewächshausabdeckung nach Patentanspruch 1, wobei die variable Konzentration solcher Mikro-Glashohlkugeln zwischen 0,2 und 20% liegt.

3. Flexible, transparente Folie nach Patentanspruch 1, wobei die im mittleren bis langen Infrarot (Wellenlänge im Bereich 7.000 und 13.000 nm) berechneten Treibhauseffekt-Eigenschaften um wenigstens 3% höher sind als jene, die die gleiche Folie ohne Mikrokugeln hätte.

4. Flexible, transparente Folie nach Patentanspruch 1 zur Verwendung als Gewächshausabdeckung, die des Weiteren aufgrund ihrer Eigenschaften (nach EN13206-2017) wie folgt klassifiziert ist: Normal, thermisch klar oder thermisch diffus.

5. Flexible, transparente Folie nach einem oder mehreren der vorstehenden Patentansprüche, mehrschichtig, wobei eine oder mehrere Schichten HGM umfassen.

6. Flexible, transparente Folie nach einem oder mehreren der vorstehenden Patentansprüche, einschichtig, mit eingeschlossenen HGM.

7. Verfahren zur Herstellung einer flexiblen, transparenten Folie nach einem jeglichen der vorstehenden Patentansprüche, **dadurch gekennzeichnet, dass** die Herstellung durch eine Technologie der Mono- oder Co-Extrusion erfolgt, mit Blas- oder Flachextrusion.

## Revendications

1. Film souple transparent pour l'application de couverture de serres, **caractérisé en ce qu'**il contient un ou plusieurs des polymères suivants : LDPE, LLDPE, PA, PU, PVC, EVA, EVOH, EBA, HDPE, PP, EMA, copolymères des polymères précédemment cités et où :
a. la concentration en microsphères de verre creuses (HGM) est comprise entre 0,1 et 99%;
b. la densité des HGM se situe entre 0,125 et 0,6 g/cm³, avec un intervalle de densité qui se situe entre 0,1 et 0,63 g/cm³ et une densité apparente qui se situe entre 0,05 et 0,43 g/cm³ ;
c. ledit film est un film multicouche constitué d'une première couche qui, pendant le processus d'extrusion, est combinée avec au moins une deuxième couche ;
d. ces films comprennent des HGM et sont produits avec une épaisseur comprise entre 10 et 1 000 µm ;
et où le film susmentionné présente des sphères de verre creuses dont la taille de particule D50 est comprise entre 15 et 20 µm, de sorte que la transmittance dans l'infrarouge (NIR) entre 1 100 et 2 500 nm est inférieure d'au moins 5 % par rapport au même film qui ne contient pas les microsphères.

2. Film souple transparent pour l'application de couverture de serres selon la revendication 1, où la concentration variable de ces microsphères de verre creuses est comprise entre 0,2 et 20 %.

3. Film souple transparent selon la revendication 1, où les caractéristiques de l'effet de serre calculées dans la plage de l'infrarouge moyen-long (longueur d'onde comprise entre 7 000 et 13 000 nm) sont supérieures d'au moins 3 % par rapport à celles du même film qui ne contient pas de microsphères.

4. Film souple transparent selon la revendication 1, pour l'application de couverture de serres et pour ses caractéristiques classées (selon la norme EN 13206-2017) comme : Normal, Clair Thermique ou Diffuseur Thermique.

5. Film souple transparent, selon l'une ou plusieurs des revendications précédentes, multicouche, où une ou plusieurs couches comprennent des HGM.

6. Film souple transparent, selon l'une ou plusieurs des revendications précédentes, monocouche, qui incorpore des HGM.

7. Méthode pour la production d'un film souple transparent selon l'une quelconque des revendications précédentes, **caractérisée en ce qu'**il est produit par la technologie de mono ou coextrusion, avec extrusion soufflée, ou extrusion filière plate.
